# EUROPÄISCHE PATENTANMELDUNG

(11) **EP 0 671 840 A2**
(43) Veröffentlichungstag der Anmeldung: **13.09.1995**
(21) Anmeldenummer: 94116453.5
(22) Anmeldetag: 19.10.1994
(51) Int. Cl.: H04M 3/42, H04M 3/50

(54) **Verfahren zur Erkennung von buchstabierten Namen oder Begriffen für Kommunikations-Vermittlungsanlagen**

(30) Priorität: 10.03.1994 DE 4408086
(71) Anmelder: ROBERT BOSCH GMBH, 70442 Stuttgart (DE)
(72) Erfinder: Euler, Stephan, Dr., D-63512 Hainburg (DE)

(57) **Zusammenfassung**

Mit diesem Verfahren soll einem Benutzer die Möglichkeit gegeben werden, über eine Kommunikations-Vermittlungsanlage (KVA) mit einfachen Bedienungsprozeduren und sprachlicher Eingabe seine Wünsche nach einer Auskunft zu äußern. Dabei sollen vorhandene Strukturen sowohl bei der Kommunikations-Vermittlungsanlage (KVA) als auch bei bereits in gespeicherter Form bestehenden Datenbanken, Wörterbüchern und anderen Verzeichnissen unverändert übernommen werden können.

Nach dem Aufbau einer Verbindung zu einer in der Kommunikations-Vermittlungsanlage vorhandenen Spracherkennungseinrichtung (SPE) können von einem Anrufer (A) gesprochene Buchstaben oder Ziffern zunächst unverändert erkannt werden. Die dabei entstehenden Folgen von Buchstaben oder Ziffern werden durch einen Umsetzer (UM) in diejenige Schreibweise gebracht, welche in einem vorhandenen Nachschlagspeicher (NSP) angewendet wird. Daran anschließend findet ein Vergleich mit den im Nachschlagspeicher (NSP) vorhandenen Eintragungen statt, und die so gewonnenen Abfrageergebnisse werden zusammen mit zugeordneten Daten aus dem Nachschlagspeicher (NSP) dem Anrufer (A) übermittelt.

## Beschreibung

Die Erfindung betrifft ein verfahren zur Erkennung von buchstabierten Namen oder Begriffen für Kommunikations-Vermittlungsanlagen nach dem Oberbegriff des Patentanspruchs 1.

In der Beschreibungseinleitung zur DE-AS 27 44 005, wo eine Vorrichtung zur Erkennung und Auskopplung von Nachwahlimpulsen beschrieben wird, ist ausgeführt, daß über das Telefonnetz Auskunftseinrichtungen angesteuert werden können. Als Beispiel ist unter anderem in der Spalte 2 erwähnt, daß ein Auskunftssystem über Zugverbindungen zu ca. 300 Zielorten einem anrufenden Teilnehmer die günstigste Zugverbindung mitteilt. Es entsteht dabei ein Dialog mit dem anrufenden Teilnehmer, wobei der Benutzer durch eine Ansage in künstlicher Sprache (Vocoder) aufgefordert wird, die notwendigen Eingaben vorzunehmen. Die Eingabe der Auswahlkriterien vom anrufenden Teilnehmer aus erfolgt dabei ausschließlich durch das Wählen von Ziffern. Dies erfordert vom Benutzer ein hohes Maß an Konzentration und ein vorheriges Nachschlagen in einem Verzeichnis, um z. B. die Postleitzahl oder Ortnetzkennzahl eines Zielortes herauszufinden. Der Benutzer muß also Auswahlkriterien umsetzen und bei der Eingabe von Wählziffern sich genau an die Anweisungen halten, die ihm von der Auskunftszentrale zugesprochen werden. Dabei ist die Bedienungsprozedur relativ kompliziert und nimmt längere Zeit in Anspruch.

Ein Aufsatz mit der Überschrift: "Anwendung des N-best-Lösungsalgorithmus bei sprecherunabhängiger Buchstabenerkennung über das Telefon" ist abgedruckt ab Zeile 2081 in der Fachveröffentlichung "Eurosspeech '93", welche anläßlich der 3. Europäischen Konferenz über Sprachkommunikation und -technologie (Berlin 21.-23.09.1993) herausgegeben wurde. An dieser Stelle (Volume3) ist erwähnt, daß eine sogenannte Sprachdatenbank vorhanden ist, welche etwa 3000 buchstabierte Namen von Städten enthält. Die Spracherkennung basiert auf einem Verfahren, bei dem diskrete Markov-Modelle angewendet werden. Damit werden Buchstabenfolgen erkannt und mit den in der Datenbank vorhandenen Buchstabenfolgen verglichen. Bei dem an dieser Stelle beschriebenen Verfahren ist es jedoch notwendig, die Datenbank sehr stark an das Spracherkennungssystem anzupassen. So wird beispielsweise angegeben, daß der Name der Stadt Cannes zwei verschiedene Eintragungen in der Datenbank benötigt, weil verschiedene Buchstabiermöglichkeiten gegeben sind. Es ist deshalb im 1. Absatz auf Seite 2082 angegeben, daß sich durch derartige Variationen die Größe des sogenannten Wörterbuchs um 20 bis 40% erhöht. Eine weiter Möglichkeit besteht darin, dem sogenannten Wörterbuch ein Netzwerk zuzuordnen, worin festgelegt ist, welche einzeln erkannten Buchstaben aufeinanderfolgen können oder nicht. Ein derartiges Netzwerk muß zusätzlich erarbeitet werden. Ab einer gewissen Größe des Wörterbuches ist ein derartiges Netzwerk nicht mehr beherrschbar, wie dies auf Seite 2082 rechts oben beschrieben wird.

Außerdem wird eine 2-Schritt-Methode auf Seite 2083 beschrieben, wonach im 1. Schritt beim Erkennen des Sprachsignals eine Sequenz von Buchstaben ausgegeben wird. Im 2. Schritt wird im Wörterbuch nach demjenigen buchstabierten Namen gesucht, welcher der erkannten Sequenz am nächsten kommt.

Da bei einem derartigen Verfahren eine Datenbank oder ein Wörterbuch auf der Basis von Buchstabierfolgen aufgebaut werden muß, sind bereits bestehende Verzeichnisse nicht ohne weiteres anwendbar. Vorhandene Datenbanken, Verzeichnisse, Wörterbücher oder ähnliches müßten also so umgearbeitet werden, daS eine Zusammenarbeit mit dem in der genannten Literaturstelle beschriebenen Verfahren möglich ist. Es ist in diesem Artikel außerdem nicht angegeben, in welcher Weise eine derartige Spracherkennungseinrichtung in einem Kommunikationssystem angewendet werden kann.

Die Aufgabe der Erfindung besteht darin, ein verfahren anzugeben, womit ein Benutzer über eine Kommunikations-Vermittlungsanlage mit einfachen Bedienungsprozeduren und sprachlicher Eingabe seine Wünsche nach einer Auskunft äußern kann. Dabei sollen vorhandene Strukturen sowohl bei der Kommunikations-Vermittlungsanlage als auch bei bereits in gespeicherter Form bestehenden Datenbanken, Wörterbüchern und anderen Verzeichnissen unverändert verwendet werden können.

Zur Lösung dieser Aufgabe ist eine Merkmalskombination vorgesehen, wie sie im Patentanspruch 1 angegeben ist.

Damit wird in vorteilhafter Weise erreicht, daS einem Benutzer geläufige Abläufe in einfacher Form die Bedienung wesentlich erleichtern, und daß bereits bestehende Datenquellen ohne Anpassung verwendbar sind.

Weiterbildungen der Erfindung ergeben sich aus den Unteransprüchen.

Ein Ausführungsbeispiel der Erfindung wird nachfolgend anhand von Zeichnungen näher erläutert.

Es zeigt
- Figur 1: das Blockschaltbild einer Kommunikations-Vermittlungsanlage mit einer Spracherkennungseinrichtung
- Figur 2: das Blockschaltbild der Spracherkennungseinrichtung
- Figur 3: den schematischen Ablauf einer Namenserkennung

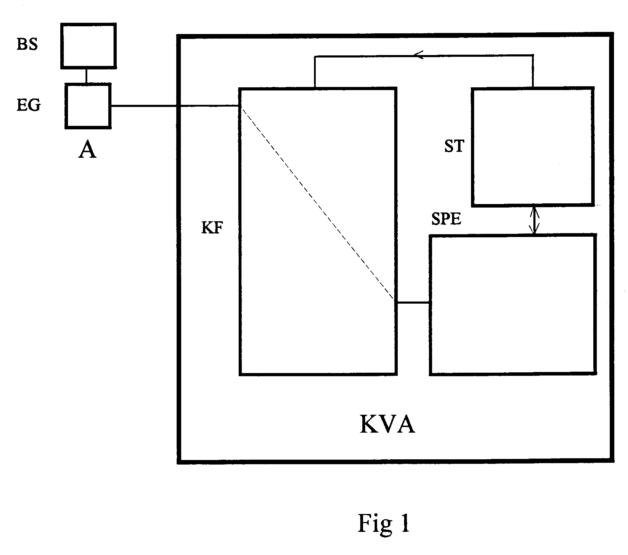

In der Figur 1 ist eine zwischen dem Endgerät EG eines Anrufers A und einer Spracherkennungseinrichtung SPE bestehende Verbindung über das Koppelfeld KF der Kommunikations-Vermittlungsanlage KVA dargestellt. Der Aufbau einer derartigen Verbindung rfolgt in bekannter Weise durch Wahl einer Kennziffer, einer verkürzten oder vollständigen Rufnummer. Dabei wird von der am Aufbau einer derartigen Verbindung beteiligten Steuerung ST ermittelt, mit welchen Einrichtungen das Endgerät EG des Anrufers ausgestattet ist. Es wird also festgestellt, ob bei diesem Endgerät EG eine Anzeigeeinrichtung oder ein Bildschirm BS vorhanden ist oder nicht. Diese bei der Identifizierung des Anschlusses eines Anrufers A festgestellten Informationen werden der Spracherkennungseinrichtung SPE mitgeteilt. In entsprechender Weise gibt sich die Spracherkennungseinrichtung SPE zu erkennen, indem ein Meldetext ausgegeben wird, der entweder in einer Anzeige erscheint oder als Sprache übertragen wird. Dabei werden dem Anrufer A Bedienungshinweise mitgeteilt. Für den Fall, daß in der Spracherkennungseinrichtung mehrere Kategorien von Abfragen möglich sind, wird der Anrufer A aufgefordert, eine dieser Kategorien auszuwählen. Zu diesem Zweck kann eine weitere Wahlinformation oder das Betätigen einer Sondertaste dienen. Der Anrufer A wird außerdem dazu aufgefordert, den als Abfragekriterium dienenden Namen oder Begriff in üblicher Weise einzeln zu buchstabieren.

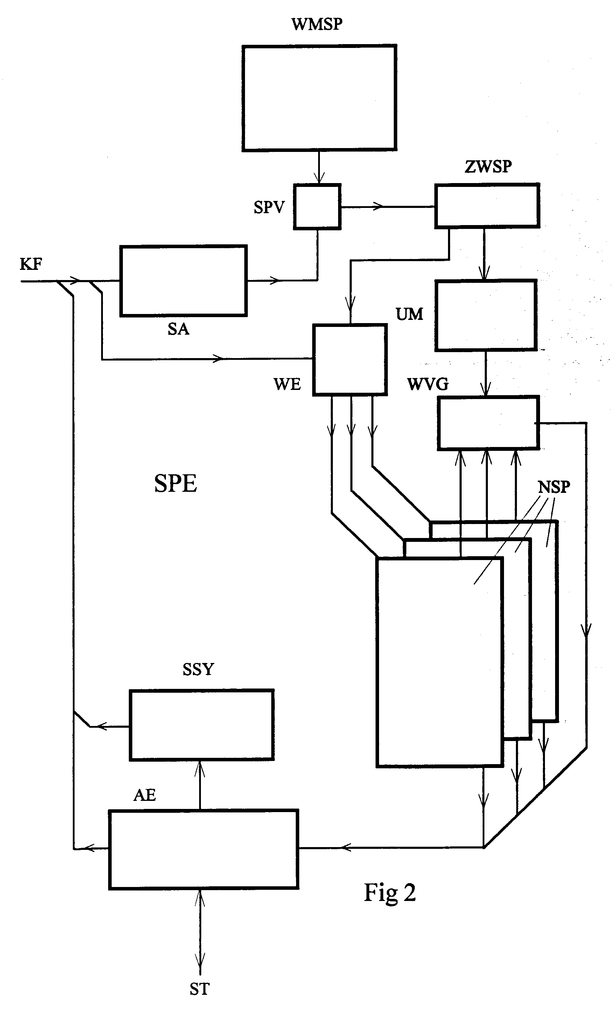

Anhand der Figur 2 wird nun beschrieben, auf welche Weise die Spracherkennungseinrichtung SPE für den Anrufer A tätig wird und ihm die Abfrageergebnisse übermittelt. Die vom Anrufer A abgegebene sprachliche Äußerung wird zunächst einer Sprachanalyseeinrichtung SA angeboten und in Merkmalsvektorfolgen umgewandelt, welche bei der Spracherkennung üblich sind. Die Lautkombination, welche beim Buchstabieren eines einzelnen Buchstabens entsteht, wird als Wort aufgefaßt. In einem Wortmusterspeicher WMSP sind von jeder Lautfolge, die beim Buchstabieren entstehen kann, Wortmodelle abgelegt. Diese Wortmodelle dienen als Referenzmuster und wurden zuvor von mehreren Sprechern trainiert, wobei die Erkennungswahrscheinlichkeit einer jeden einzelnen Lautkombination, die einem Buchstaben zugeordnet ist, getestet wurde. Die in der Sprachanalyseeinrichtung SA jeweils befindlichen Merkmalsvektoren werden dann nacheinander einem Sprachvergleicher SPV angeboten. Es findet dann eine sprecherunabhängige Spracherkennung statt, wobei die im Wortmusterspeicher WMSP befindlichen Wortmodelle auf Gleichheit oder annähernde Übereinstimmung geprüft werden.

Die dabei erkannten einzelnen Buchstabenfolgen werden vom Sprachvergleicher SPV ausgegeben und in einem Zwischenspeicher ZWSP als Buchstabenfolge abgelegt.

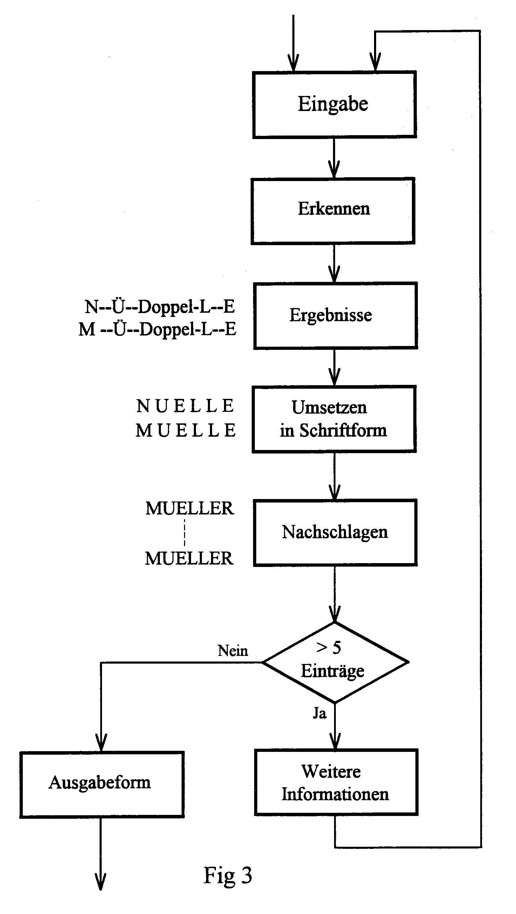

In der Figur 3 sind die einzelnen Schritte angegeben, die bis zu diesem Stadium durchzuführen sind. Nach der Eingabe in den Sprachvergleicher findet das Erkennen statt, wobei zunächst die Ergebnisse so vorliegen, wie sie beim Buchstabieren entstanden sind. Es sei angenommen, daß der Anrufer das Wort Müller in der Reihenfolge M-Ü-doppel-L-E-R gesprochen hat. Unter der Annahme, daß der Konsonant M undeutlich erkannt wurde und der letzte Konsonant R zu schwach übertragen wurde, liegen zunächst mehrere Ergebnisse vor, wie es in Figur 3 angegeben ist, welche als Hypothesen verwendet werden.

Die im Zwischenspeicher ZWSP befindliche Buchstabenfolge wird so wie sie beim Buchstabieren erkannt worden ist, daS heißt einschließlich etwaiger zusätzlicher Befehlswörter (doppel), an einen Umsetzer UM weitergegeben, wie dies in Figur 2 dargestellt ist. In diesem Umsetzer UM ist angegeben, nach welchen Regeln die einzelnen Einträge im Nachschlagspeicher NSP strukturiert sind. Mit diesen Informationen ist der Umsetzer UM in der Lage, beispielsweise bei einem Umlaut diesen in zwei Vokale umzuwandeln. Eine beim Buchstabieren gebräuchliche Formulierung (doppel-L) wird dann in zwei aufeinander folgende gleiche Buchstaben verwandelt. Im Umsetzer UM findet also ein Umsetzen in die Schriftform statt, so daß Worte entstehen, mit denen direkt eine Suche im Nachschlagspeicher NSP möglich ist. Dabei werden die einzelnen Buchstaben beispielsweise durch ihren ASCII-Code repräsentiert. Die dabei im betrachteten Beispiel entstandenen Worte (NUELLE, MUELLE) werden, wie in Figur 3 dargestellt ist, zum Nachschlagen verwendet.

Die nach der Umsetzung in die Schriftform gewonnenen Ergebnisse werden einem Wortvergleicher WVG angeboten, welcher mit dem Nachschlagspeicher NSP verbunden ist. Der Nachschlagspeicher NSP wird dann auf das Vorhandensein der vom Umsetzer UM gelieferten Buchstabenfolgen abgesucht, wobei auf Übereinstimmung und Ähnlichkeiten geprüft wird. Wenn im Nachschlagspeicher NSP ein passendes Wort gefunden wird, so wird dieses an eine Ausgabeeinheit AE übermittelt. Dabei können auch zu unvollständig buchstabierten Namen oder Begriffen passende Eintragungen gefunden werden. Beim Auffinden eines derartigen Abfrageergebnisses werden im Nachschlagspeicher NSP befindliche zusätzliche Eintragungen ebenfalls an die Ausgabeeinheit AE abgegeben. Unter der Annahme, daß beim Vergleichen mit dem Nachschlagspeicher NSP der Name "Müller" gefunden wurde, und daß es sich beim Nachschlagspeicher NSP um ein gespeichertes Telefonbuch handelt, wird in diesem Fall die jeweils zugehörige Telefonnummer und ggf. Adresse mit ausgegeben.

Falls dabei mehrere gleichlautende Abfrageergebnisse vorliegen, so wird die Anzahl der Einträge der Ausgabeeinheit AE zusätzlich mitgeteilt. Die Ausgabeeinheit AE kann daraufhin eine Information für den Anrufer A generieren, womit dieser aufgefordert wird, zusätzliche Angaben zur genaueren Bestimmung des Abfrageergebnisses zu übermitteln. So könnte es beim Beispiel des Namens Müller zweckmäßig sein, nachträglich den Vornamen in die Spracherkennungseinrichtung SPE einzugeben. Mit einer gleichen Prozedur, wie sie zuvor beschrieben wurde, wird nun im Nachschlagspeicher NSP die gewünschte Eintragung gesucht, so daß die Anzahl von Ergebnissen überschaubar wird. In der Figur 3 ist als Beispiel angegeben, daß weitere Informationen vom Anrufer A angefordert werden, wenn mehr als 5 Einträge im Nachschlagspeicher NSP gefunden werden. Eine derartige Festlegung kann jedoch ohne weiteres dem jeweiligen Zweck entsprechend mit anderen Zahlenwerten eingerichtet werden. Dabei ist es sinnvoll zu berücksichtigen, welche Kapazitäten bei der Anzeige am Endgerät EG des Anrufers A vorhanden sind. Für den Fall, daß ein Bildschirm BS zur Verfügung steht, kann möglicherweise auf weitere Informationen ganz verzichtet werden, weil auf dem Bildschirm alle Abfrageergebnisse darstellbar sind.

Da die Ausgabeeinheit AE der Spracherkennungseinrichtung SPE von der Steuereinrichtung ST mitgeteilt bekommt, welche Ausstattung beim Endgerät EG des Anrufers A vorhanden ist, wird eine dementsprechende Information zusammengestellt, die an das Endgerät EG des Anrufers A übermittelt wird. Wenn es sich um eine Anzeigeinformation handelt, so wird dabei berücksichtigt, ob die Kapazität eines Bildschirms BS zur Verfügung steht, oder ob im Endgerät EG ein Display mit eingeschränkter Darstellungskapazität vorhanden ist. Bei einem einfachen Endgerät EG ohne jegliche Anzeigeeinrichtung stellt die Ausgabeeinheit AE einen Text zusammen, der einer Sprachsyntheseeinheit SSV übermittelt wird. Dort wird ein sprachlicher Text generiert, der über das Koppelfeld KF der Kommunikations-Vermittlungsanlage KVA zum Endgerät EG gelangt. Besonders in diesem Fall ist es zweckmäßig, mit einer sprachlich abgegebenen Aufforderung an den Anrufer weitere Informationen zur Einschränkung der Anzahl von Abfrageergebnissen zu verlangen, damit die sprachliche Mitteilung von Abfrageergebnissen nicht zu lang andauert.

Wenn der Nachschlagspeicher NSP aus mehreren Sektionen besteht, oder wenn mehrere Nachschlagspeicher NSP für unterschiedliche Anwendungsfälle vorgesehen sind, so kann der Anrufer A durch Nachwahl einer Ziffer oder durch sprachliche Abgabe eines Befehls eine Auswahl des Nachschlagspeichers NSP bewirken. Neben der bereits angedeuteten Anwendung einer Auskunft aus einem gespeicherten Telefonverzeichnisses kann dann beispielsweise auch eine Abfrage von Artikelnummern, Produktbezeichnungen usw. erfolgen. Zu diesem Zweck ist in der Spracherkennungseinrichtung SPE ein Wahlerkenner WE vorgesehen, welcher vom Anrufer A abgegebene Wahlkriterien empfangen kann. Seine Ausgänge bewirken dann eine Auswahl des Nachwahlspeichers NSP oder die Auswahl eines Speicherbereiches. Der Wahlempfänger WE ist außerdem mit dem Zwischenspeicher ZWSP verbunden, um mit einem sprachlich eingegebenen Auswahlbefehl ebenfalls einen bestimmten Nachschlagspeicher NSP oder einen diesbezüglichen Speicherbereich anzusteuern.

Wenn einem Anrufer A Abfrageergebnisse übermittelt worden sind, so können diese dazu verwendet werden, unmittelbar anschließend Kommunikationsverbindungen aufzubauen. Hierzu genügt es, beim Vorliegen von mehreren Abfrageergebnissen ein bestimmtes auszuwählen und zu markieren und anschließend eine Funktionstaste am Endgerät EG zu betätigen. Ein derartiger Befehl wird dann über die noch bestehende Verbindung zur Spracherkennungseinrichtung SPE übermittelt und von dort an die Steuerung ST weitergereicht. Dabei werden die für das Aufbauen einer Verbindung relevanten Informationen aus der Ausgabeeinheit AE ebenfalls zur Steuerung ST übergeben. Das Endgerät EG des Anrufers A wird daraufhin wie bei einer Rufumleitung mit der gewünschten Stelle verbunden. Im Anschluß daran wird die Verbindung zur Spracherkennungseinrichtung SPE ausgelöst. Selbstverständlich ist es auch ohne weiteres möglich, die Verbindung zur Spracherkennungseinrichtung SPE zu trennen, ohne daß eine neue Verbindung aufgebaut wird. Von der Spracherkennungseinrichtung SPE kann auch eine Trennung der Verbindung selbsttätig bewirkt werden, wenn die Ausgabe der Abfrageergebnisse durchgeführt worden ist und vom Anrufer A nach Ablauf einer vorbestimmten Zeit keine weiteren Eingaben erfolgen.

Wenn eine Kommunikations-Vermittlungsanlage KVA mit einer Spracherkennungseinrichtung SPE ausgestattet ist, die nach den zuvor beschriebenen Verfahren arbeitet, so stehen den Benutzern vielfältige Auskunftsmöglichkeiten zur Verfügung. Da dieses Verfahren vielfältige Anpassungsmöglichkeiten bietet, können alle Eigenschaften von Endgeräten EG und die Arbeitsweisen von Kommunikations-Vermittlungsanlagen so berücksichtigt werden, daß keine Änderungen an bestehenden Strukturen notwendig sind. Bereits bestehende auf Datenträgern gepeicherte Verzeichnisse können unverändert übernommen werden, wobei lediglich der in der Spracherkennungseinrichtung SPE vorhandene Umsetzer UM entsprechend eingestellt werden muß.

## Patentansprüche

1. Verfahren zur Erkennung von buchstabierten Namen oder Begriffen für Kommunikations-Vermittlungsanlagen, wobei eine Spracherkennungseinrichtung zum Erkennen von einzeln gesprochenen Buchstaben, Ziffern oder Befehle verwendet wird, die nach einem bekannten sprecherunabhängigen Erkennungsverfahren arbeitet, bei dem die zu erkennenden einzelnen Sprachäußerungen zuvor trainiert wurden und als nach einem bekannten Algorithmus erzeugte Sprachmodelle in einem Referenzspeicher abgelegt sind,
**dadurch gekennzeichnet,**
daß in der Kommunikations-Vermittlungsanlage (KVA) eine Spracherkennungseinrichtung (SPE) vorgesehen ist, die mit einer Kennziffer oder Rufnummer oder mit Betätigen einer Sondertaste direkt ansteuerbar ist, wobei dem Anrufer (A) ein sprachlicher Ansagetext oder eine Anzeigeinformation übermittelt wird, worin auch Bedienungshinweise enthalten sind,
daß die vom Anrufer (A) gesprochenen Buchstaben, Ziffern oder Befehle zunächst unverändert erkannt, in einem Zwischenspeicher (ZWSP) abgelegt und danach durch einen Umsetzer (UM) in diejenige Schreibweise umgesetzt werden, welche in einem Nachschlagspeicher (NSP) angewendet wird, daß daran anschließend ein Wortvergleicher (WVG) angesteuert wird, der einen Vergleich mit den in einem vorhandenen Nachschlagspeicher (NSP) enthaltenen Eintragungen durchführt, wobei gefundene Übereinstimmungen oder Ähnlichkeiten erkannt werden,
und daß die so gewonnenen Abfrageergebnisse zusammen mit zugeordneten Daten aus dem Nachschlagspeicher (NSP) dem Anrufer (A) übermittelt werden.

2. Verfahren nach Anspruch 1,
**dadurch gekennzeichnet,**
daß die übermittelte Anzeigeinformation auf einem Bildschirm (BS) oder einer in einem Fernsprech-Endgerät (EG) beim Anrufer (A) befindlichen Anzeigeeinrichtung dargestellt wird.

3. Verfahren nach Anspruch 1,
**dadurch gekennzeichnet,**
daß die übermittelte Anzeigeinformation nur dann als sprachliche Mitteilung ausgegeben wird, wenn sich beim Fernsprech-Endgerät (EG) keine Anzeigevorrichtung befindet.

4. Verfahren nach Anspruch 1,
**dadurch gekennzeichnet,**
daß während des Buchstabierens gesprochene Worte (Doppel, Umlaut), die eine Buchstabenfolge oder -art näher kennzeichnen, als solche erkannt werden und eine Umsetzung in die gewünschte Reihenfolge oder Zeichenart bewirken.

5. Verfahren nach Anspruch 1,
**dadurch gekennzeichnet,**
daß auch Zwischenergebnisse bei der Spracherkennung zum Anrufer (A) übermittelt werden, wobei es sich um die Reihenfolge der erkannten Buchstaben oder Zahlen handeln kann.

6. Verfahren nach Anspruch 1,
**dadurch gekennzeichnet,**
daß im Anschluß an die zur Ansteuerung der Spracherkennungseinrichtung (SPE) dienende Kennziffer oder Rufnummer mit eine weitere Ziffer nachgewählt werden kann, um einen bestimmten Nachschlagspeicher (NSP) oder einen Teil davon auszuwählen, dessen Eintragungen zum Vergleichen herangezogen werden sollen.

7. Verfahren nach Anspruch 1,
**dadurch gekennzeichnet,**
daß der Anrufer (A) durch eine Anzeigeinformation oder durch eine Sprachansage aufgefordert wird, zusätzliche Angaben (Vornamen, Sachergänzungen) zu buchstabieren, wenn beim Vergleichen im Nachschlagspeicher (NSP) mehr als eine vorbestimmte Anzahl von Eintragungen als übereinstimmend erkannt werden.

8. Verfahren nach Anspruch 1,
**dadurch gekennzeichnet,**
daß nach eindeutiger Festlegung auf ein einziges ausgewähltes Abfrageergebnis durch die Abgabe eines Schaltbefehls vom Endgerät (EG) des Anrufers (A) aus der Aufbau einer neuen Kommunikations-Verbindung bezogen auf dieses Abfrageeergebnis von der Spracherkennungseinrichtung (SPE) aus veranlaßt werden kann.
